# EUROPEAN PATENT SPECIFICATION

(11) **EP 1 923 736 B1**
(45) Date of publication and mention of the grant of the patent: **03.06.2009**
(21) Application number: 07114630.2
(22) Date of filing: 20.08.2007
(51) Int. Cl.: G02F 1/1339, G02F 1/1333, G02F 1/1341, G02F 1/133

(54) **Manufacturing method and manufacturing apparatus for a display panel**
Verfahren und Vorrichtung zur Herstellung eines Anzeigepaneels
Procédé et appareil de fabrication d'un panneau d'affichage

(30) Priority: 20.11.2006 JP 2006313404
(43) Date of publication of application: 21.05.2008
(73) Proprietor: Fujitsu Ltd., Kawasaki-shi, Kanagawa 211-8588 (JP)
(72) Inventor: Mishima, Kazuhisa, Kanagawa 211-8588 (JP); Suzuki, Masaharu, Kanagawa 211-8588 (JP); Tomita, Junji, Kanagawa 211-8588 (JP); Kurosaki, Yoshihisa, Kanagawa 211-8588 (JP)
(74) Representative: Cooper-Rolfe, Elizabeth Louise

(56) References cited:
- US-A- 6 137 559
- US-A1- 2003 169 393
- US-A1- 2006 011 292

## Description

### BACKGROUND OF THE INVENTION

### 1. Field of the Invention

The present invention generally relates to manufacturing methods and manufacturing apparatuses of panels, such as a liquid crystal display panel, which are formed by laminating a pair of substrate with each other. The present invention particularly relates to a manufacturing method and a manufacturing apparatus of a liquid crystal display panel, which is formed by injecting a liquid crystal into a cell space formed between a pair of transparent substrate. Hereinafter, a description will be given of a liquid crystal display panel as an example.

### 2. Description of the Related Art

In recent years, display devices represented by a liquid crystal display device, which performs screen display using a liquid crystal material, have been widely used as a display part of electronic equipments. A liquid crystal display device generally has a liquid crystal display panel, which is formed by injecting a liquid crystal into a cell space formed between a pair of transparent substrates so as to perform display by driving the liquid crystal by applying a drive voltage to electrodes of the liquid crystal display panel.

The transparent substrates of a liquid crystal display panel are, for example, glass substrates. A cell space into which a liquid crystal is injected is formed by laminating the glass substrates with each other by sandwiching a seal adhesive between the glass substrates. When laminating the glass substrates, it is necessary to apply a pressure onto the glass substrates so as to bring the seal adhesive into closely contact with the glass substrates. According to a conventional manufacturing method of a liquid crystal display panel, generally, the glass substrates are laminated by physically applying a press force onto the glass substrates

According to the method of physically applying a press force onto the glass substrates, it is difficult to apply a pressure uniformly onto the whole glass substrates. Thus, there is a problem in that a gap between the glass substrates to form the cell space becomes uneven. Additionally, in a case where a foreign matter is trapped between the glass substrates, a large press force is applied locally onto the glass substrates, which may generate a problem that the glass substrates are broken.

Instead of the glass substrates which are easily broken, transparent plastic substrates are used in some cases. However, when pressing a pair of plastic substrates from both sides, if there is a foreign matter between the plastic substrates, the plastic substrates may not be broken but deformed due to the foreign matter, which results in a problem in that the gap forming the cell space becomes uneven.

On the other hand, when laminating substrates with each other, if a surface area of each of the glass or plastic substrates is large, unevenness in the pressure being applied to the substrates tends to occur. Additionally, the pressing apparatus becomes large so that a large press force can be generated.

Conventionally, liquid crystal display panels are manufactured by laminating a pair of substrates, which forms a single liquid crystal display panel, one set by one set. However, the lamination process of the substrates requires a curing time for curing the seal material between the substrates. Thus, it takes a long time to manufacture many liquid crystal display panels, which results in a problem that a manufacturing cost of the liquid crystal display device is raised.

As a technique to reduce the manufacturing cost of the liquid crystal display device, there is suggested a method in which an opening is provided in the assembly of the laminated substrates and gas in the cell space is evacuated through the opening and thereafter a liquid crystal is injected through the same opening (for example, refer to Patent Document 1). In this method, a manifold for vacuum suction is pressed against the opening part of the substrate assembly so as to form a vacuum in the cell space through the manifold and the opening part.

Moreover, as a technique to apply a pressure onto the substrates with a simple mechanism, there is suggested a method in which a pair of substrates are sandwiched from both sides by magnetic sheets so as to press the substrates by a magnetic force (for example, refer to Patent Document 2).

Further, there is suggested a method of laminating large substrates and injecting a liquid crystal within a vacuum container (for example, refer to Patent Document 3). In this method, a magnetic fluid seal is used in a part where a vacuum pump is connected to the vacuum container.

Patent Document 1: Japanese Laid-Open Patent Application No. 2000-155325

Patent Document 2: Japanese Laid-Open Patent Application No. 2001-33791

Patent Document 3: Japanese Laid-Open Patent Application No. 2002-318378

In the conventional manufacturing method for manufacturing liquid crystal display panels, attention has been paid mainly to uniformization of pressure by manufacturing liquid crystal display panels one by one. Thus, it takes a time to manufacture many liquid crystal panels, and, as a result, there is a problem that the manufacturing cost of the liquid crystal display device goes up.

Moreover, there is a problem in that the pressure applied to the substrates, when laminating the substrates with each other, becomes uneven.

In US 6 137 559 A the substrates are laminated under vacuum and then exposed to ambient pressure during the curing step. This document discloses the features of the preamble of claim 1.

### SUMMARY OF THE INVENTION

It is a general object of the present invention to provide an improved and useful manufacturing method and manufacturing apparatus of a panel, in which the above-mentioned problems are eliminated.

A more specific object of the present invention is to provide a manufacturing method and a manufacturing apparatus, which enables excellent lamination by pressurizing a pair of substrates with uniform pressure.

Another object of the present invention is to provide a manufacturing method and a manufacturing apparatus, which enables lamination of a plurality of sets of substrates at the same time.

In order to achieve the above-mentioned objects, there is provided according to one aspect of the present invention a manufacturing method of a panel that is formed by laminating a pair of substrates with each other, the manufacturing method comprising: a seal forming step of providing a first seal material on one of the substrates and providing a second seal material to completely surround the first seal material; a laminating step of laminating the pair of substrates with each other in a state where a cell space is formed between the substrates with the first and second seal materials sandwiched between the substrates; a depressurizing step of depressurizing an inner space of the second seal material containing the cell space through an opening provided outside the first seal material and inside the second seal material; and a removing step of removing a portion where the second seal material is provided so that the cell space formed by the first seal material remains.

In the manufacturing method according to the present invention, the seal forming step may include applying the first and second seal materials by a dispenser. The seal forming step may include providing the first seal material so as to form an opening connected to the cell space formed by the first seal material. An ultraviolet-light curable resin may be used as the first and second seal materials, and the seal forming step may include irradiating an ultraviolet light onto the first and second seal materials so as to set the first and second seal materials in a half-cured state. The laminating step may include irradiating an ultraviolet light onto the first and second seal materials so as to cure the first and second seal materials and tentatively fix the substrates to each other. The depressurizing step may include heating laminated the pair of substrates so as to cure the first and second seal materials. The depressurizing step may include supporting the pair of substrates by sandwiching a peripheral portion of an opening provided in the pair of substrates by a pair of magnets via elastic materials, and simultaneously connecting a suction pipe for depressurization to the opening via the elastic materials. The depressurizing step may be carried out in a state where a plurality of the pairs of substrates are accommodated in a heating oven. The seal forming step may include providing the first seal material so as to form a plurality of the cell spaces inside the second seal material.

The manufacturing method according to the present invention may further comprise a partition-wall forming step of forming partition walls in an area forming the cell space by the first seal material, the partition walls for dividing the cell space into small areas.

Additionally, there is provided according to another aspect of the present invention a manufacturing apparatus of a panel that is formed by laminating a pair of substrates with each other, the manufacturing apparatus comprising: a support mechanism that supports a substrate lamination assembly formed by laminating the pair of substrates and tentatively fixing to each other; and a depressurizing mechanism that depressurizes a cell space formed in the substrate lamination assembly through an opening formed in the pair of substrates of the substrate lamination assembly, wherein the support mechanism simultaneously performs the support of the substrate lamination assembly and the connection for depressurization of a space between the substrates by sandwiching a peripheral portion of the opening of the pair of substrates by a pair of elastic materials.

In the manufacturing apparatus according to the present invention, the support mechanism may include the pair of elastic materials and a magnet attached to each of the elastic materials, and the substrate lamination assembly may be supported by being sandwiched by the elastic materials by an attraction force between the magnets. The pair of elastic materials may include a first elastic material having a through hole and a second elastic material having no through hole, and wherein the connection for depressurization may be performed by positioning and fixing the substrate lamination assembly to the support mechanism so that the through hole of the first elastic material aligns with the opening of the substrate lamination assembly, and sealing the opening on a side opposite to a side facing the first elastic material by the second seal material. The support mechanism may further include a third elastic material having a through hole and a magnet attached to the third elastic material, and the support mechanism may support a plurality of the substrate lamination assemblies via the first and second elastic materials and the third elastic materials in a state where the plurality of substrate lamination assemblies can be depressurized.

The manufacturing apparatus according to the present invention may further comprise a heating oven that accommodates the support mechanism. The manufacturing apparatus may further comprise a suction apparatus located outside the heating oven so as to depressurize the substrate lamination assembly accommodated in the heating oven by using the suction apparatus as a suction source.

Additionally, there is provided according to another aspect of the present invention a manufacturing method of a panel that is formed by laminating a pair of substrates with each other, the manufacturing method comprising: a step of providing a seal part on at least one of the pair of substrates, the seal part to be provided between the pair of substrates; a step of facing the pair of substrates so as to sandwich the seal part therebetween; and a step of depressurizing a space between faced the substrates so as to laminate the pair of substrates with each other.

In the manufacturing method according to the present invention, the seal part may be provided on at least one of the pair of substrates so that the seal part surrounds a predetermined area with an opening formed by the seal part, the opening being formed by not providing a part of the seal part.

In the manufacturing method according to the present invention, a material may be used as the seal part, the material having an adhesion action to laminate the pair of substrates with each other. The manufacturing method according to the present invention may further comprise a step of forming a second seal part that surrounds the seal part outside an area where the seal part is formed, and wherein the depressurizing step may include depressurizing inside an area surrounded by the second seal part.

The manufacturing method according to the present invention may further comprise a step of forming a first opening and a second opening in an area inside the second seal part, the first opening formed in one of the pair of substrates and the second opening formed in the other of the pair of substrates at a position opposite to the first opening.

The manufacturing method according to the present invention may further comprise a connecting step of connecting, prior to the depressurizing step, a depressurizing mechanism performing depressurization to the first opening, and also connecting one of a seal material for sealing the second opening and a first opening formed in another pair of substrates to the second opening. In the manufacturing method according to the present invention, the connecting step may include connecting a plurality of the pair of substrates to the depressurizing mechanism, and the depressurizing step may include depressurizing spaces each of which is formed between respective one of the plurality of the pairs of substrates connected to the depressurizing mechanism simultaneously.

According to the present invention, the cell space is depressurized by evacuating gas from the cell space through the opening of the substrate lamination assembly having therein the cell space formed by laminating the substrates with each other, thereby allowing uniform pressurization of the substrates.

Other objects features and advantages of the present invention will become more apparent from the following detailed description when read in conjunction with the accompanying drawings.

### BRIEF DESCRIPTION OF THE DRAWINGS

FIG. 1 is an illustration showing a process of forming a cell space, into which a liquid crystal is injected, by laminating a pair of transparent substrates with each other;
FIG. 2 is a plan view of a substrate lamination assembly provided with a seal material to surround another seal material defining a cell space;
FIG. 3 is a cross-sectional view showing a state where a suction pipe of a vacuum suction apparatus if connected to an opening of the substrate lamination assembly;
FIG. 4 is a cross-sectional view showing a state in a middle of a process of attaching a plurality of substrate lamination assemblies to the same suction pipe;
FIG. 5 is a cross-sectional view showing a state where a plurality of substrate lamination assemblies are attached to the same suction pipe;
FIG. 6 is a plan view of a substrate lamination assembly in which a plurality of cell spaces are formed; and
FIG. 7 is an illustration of a bake-forming apparatus for bake-forming a substrate lamination assembly while evacuating gas from the substrate lamination assembly.

### DETAILED DESCRIPTION OF THE PREFERRED EMBODIMENTS

A description will be given, with reference to the drawings, of lamination of substrates that constitute a liquid crystal display panel according to a first embodiment of the present invention. The liquid crystal display panel according to the present embodiment is formed by laminating two sheets of transparent substrate and injecting a liquid crystal into a space formed between the substrates.

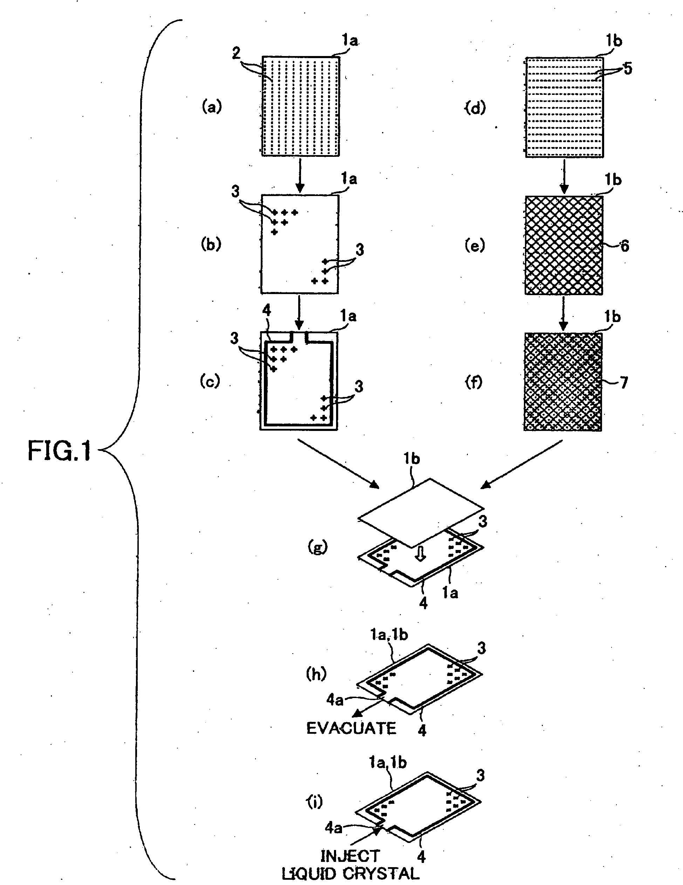

First, a description will be given, with reference to FIG. 1, of a method of forming a cell space into which a liquid crystal is injected by laminating a pair of transparent substrates. FIG. 1 is an illustration showing a process of forming a cell space into which a liquid crystal is injected by laminating a pair of transparent substrates.

In the process shown in FIG. 1, first, a pair of transparent substrates 1a and 1b are prepared. As for the transparent substrates 1a and 1b, a glass substrate having a thickness of, for example, 0.2 mm or a plastic substrate having a thickness of 0.125 mm, such as a polycarbonate film, a polyethylene film or the like, is used. It should be noted that a material of the substrates and a thickness thereof are not limited to the above-mentioned.

First, a preparation process of the substrate 1a will be explained. As shown in FIG. 1-(a), transparent electrodes 2 are formed on the surface of the substrate 1a. The transparent electrodes 2 can be formed by a transparent and electrically conductive material. In FIG. 1-(a), the transparent electrodes 2 are indicated by dotted lines extending in a longitudinal direction in the figure for the sake of convenience. The transparent electrodes 2 are formed on the substrate 1a using photolithography. First, a resist made of an electrically conductive material is printed on the substrate 1a, and the transparent electrodes 2 of a linear form are formed by being subjected to exposure, development, etching and exfoliation processes. Thereafter, the substrate 1a is subjected to rinse and dry process, and, then, transferred to a partition-wall forming process.

In the partition-wall forming process, as shown in FIG. 1-(b), partition walls 3 are formed on the surface of the substrate 1a. Each of the partition walls 3 is a pillar-shaped member so that a portion surrounded by the partition walls 3 is defined as a single cell. The cell corresponds to a single pixel of the liquid crystal display device. In the partition-wall forming process, a resist made of a UV-curable resin is printed on the surface of the substrate 1a. The resist is subjected to a pre-baking process, and then subjected to exposure and development processes, which results in formation of the partition walls 3 in the resist. Then, portions of the resist other than the portions changed to the partition walls 3 are removed, and after being subjected to rinse and dry processes, only the partition walls 3 remain on the surface of the substrate 1a. Thereafter, the partition walls 3 are UV-cured, and bubbles in the partition walls 3 are removed by being subjected to a vacuum heating degassing process.

Next, in a seal forming process shown in FIG. 1-(c), a seal material 4 is applied by a dispenser so as to surround an area where the partition walls 3 are formed. The seal material 4 is a material that seals to form a cell space between the substrates 1a and 1b when laminating the substrate 1a and the substrate 1b mentioned later. In the present embodiment, the seal material 4 has a bonding function to bond the substrates 1a and 1b to each other as well as a sealing function. In the example of FIG. 1-(c), the partition walls 3 and the seal material are formed on the same surface of the substrate 1a. The applied seal material 4 is pre-baked by irradiation of UV (ultraviolet light). In this state, the partition walls 3 and the seal material 4 are in a half-cured state, and have adhesion. It should be noted that the method of providing the seal material is not limited to the application by the dispenser, and, for example, an adhesive seal material sheet previously formed in a predetermined shape may be applied to the substrate 1a. It should be noted that, as shown in FIG. 1-(c), there is an area where the seal material 4 is not applied. This area serves as a liquid crystal injection opening 4a (shown in FIG. 1-(h)) for injecting a liquid crystal between the laminated substrates.

Although FIG. 1-(a) to FIG. 1-(c) show a process of preparing the substrate 1a, the substrate 1b is prepared concurrently. The preparation of the substrate 1b is performed in a process shown in FIG. 1-(d) to FIG. 1-(f). First, as shown in FIG. 1-(d), transparent electrodes 5 are formed on the surface of the substrate 1b. The transparent electrodes 5 are formed by a process similar to the process of forming the transparent electrodes 2. The transparent electrodes 5 are formed to extend in a direction perpendicular to the extending direction of the transparent electrodes 2. It should be noted that when the substrates 1a and 1b are laminated, the transparent electrodes 2 and the transparent electrodes 5 are arranged to be perpendicular to each other so as to serve as electrodes that apply a drive voltage to the liquid crystal filled in the cell space.

Next, as shown in FIG. 1-(e), an insulating film 6 is formed so as to cover the transparent electrodes 5. The insulating film 6 is formed by printing and applying a liquid insulating material onto the entire surface of the substrate 1b where the transparent electrodes 5 are formed, and pre-baking the insulating material. It should be noted that the insulating film 6 is also transparent, but is indicated by cross-hatching in FIG. 1-(e) for the sake of convenience.

Next, as shown in FIG. 1-(f), the spacers 7 are scattered on the pre-baked insulating film 6. The spacers 7 are extremely small transparent particles that are interposed between the substrates 1a and 1b when the substrates 1a and 1b are laminated so as to form a gap forming the cell space. Accordingly, the partition walls 3 formed on the substrate 1a and the spacers 7 provided on the substrate 1b cause the substrate 1a and the substrate 1b to face each other with a predetermined distance therebetween.

After completion of the preparation of the substrates 1a and 1b as mentioned above, the process proceeds to a laminating process. In the laminating process, as shown in FIG. 1-(g), the surface of the substrate 1a on which the partition walls 3 are formed and the seal material 4 is applied and the surface of the substrate 1b on which the spacers 7 are scattered are positioned to face each other, and the seal material 4 and the partition walls 3 are cured by UV irradiation while pressing at low pressing force so as to tentatively fix the substrate 1a and the substrate 1b to each other.

Next, in the process shown in FIG. 1-(h), the seal material 4 and the partition walls 3 are baked and cured by heating, for example, at 180°C for 90 minutes while forming a vacuum in the cell space formed by being surrounded by the seal material 4. By evacuating gas through the liquid crystal injecting opening 4a, which is a part not provided with the seal material 4, an atmospheric pressure is applied to the substrates 1a and 1b from outside, and, thereby, the substrates 1a and 1b are in a pressurized state by an atmospheric pressure. Since the pressure applied to the substrates 1a and 1b is generated by an atmospheric pressure, the substrates 1a and 1b are subjected to uniform pressure. Thereby, the substrate 1a and the substrate 1b are laminated with each other in a state where they are apart from each other by the spacers 7 by a predetermined distance (for example, 0.015 mm), and the cell space surrounded by the seal material 4 is formed between the substrates 1a and 1b. It should be noted that if the seal material 4 and the partition walls 3 are made of a thermosetting resin, the seal material 4 and the partition walls 3 are heated to bake as mentioned above. However, if, for example, the seal material 4 and the partition walls 3 are made of a room temperature setting resin or a UV curable resin, there is no need to heat the laminated substrates while evacuating gas from the cell space. The seal material 4 and partition walls 3 may be cured by a curing process suitable for the material of the seal material 4 and partition walls 3.

Then, after the liquid crystal is injected into the cell space from the liquid crystal injecting opening 4a in the liquid crystal injecting process shown in FIG. 1-(i), the cell space is completely sealed and the liquid crystal display panel is completed.

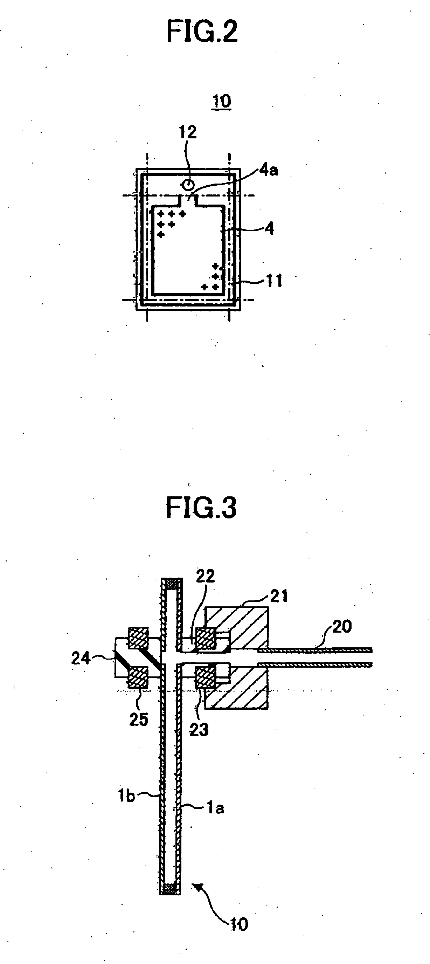

FIG. 2 is a plan view of a substrate lamination assembly 10 provided with a seal material 11 to surround outside of the seal material 4 which defines the cell space. In the present embodiment, when forming the liquid crystal display panel as mentioned above, in order to facilitate the evacuation of gas from the cell space in the curing process shown in FIG. 1-(h), the seal material 11 is provided to surround the outside of the seal material 4 which defines the cell space.

The substrate lamination assembly 10 shown in FIG. 2 has a structure in which the seal material 11 is provided around the seal material 4 in a substrate lamination assembly having the same structure as the substrate lamination assembly shown in FIG. 1-(h). The seal material 11 can be provided to the substrate 1a by applying the same material as the seal material 4 onto the substrate 1a by a dispenser. Additionally, an opening 12 is provided in the substrates 1a and 1b in the vicinity of the liquid crystal injecting opening 4a for injecting the liquid crystal into the cell space and in an area surrounded by the seal material 11.

Although a vacuum suction apparatus for forming a vacuum in the cell space is connected to the liquid crystal injecting opening 4a in the process shown in FIG. 1-(h), in the substrate lamination assembly 10 shown in FIG. 2, a vacuum is formed in the entire area surrounded by the seal material 11 including the cell space by connecting a vacuum suction apparatus such as a vacuum pump to a part where the opening 12 is formed so as to evacuate gas through the opening 12.

A description will now be given, with reference to FIG. 3, of a method of connecting the vacuum suction apparatus to the part where the opening 12 is formed. FIG. 3 is a cross-sectional view showing a state where a suction pipe 20 of the vacuum suction apparatus is connected to the opening 12 of the substrate lamination assembly 10.

An attachment block 21 is attached to an end of the suction pipe 20 of the vacuum suction apparatus (for example, a vacuum pump) not shown in the figure. A connection rubber, which is a first elastic material, is incorporated into the attachment block 21.

The substrate lamination assembly 10 is arranged so as to align, for example, the opening 12 of the substrate 1a with a through hole of the connection rubber, and a seal rubber 24, which is a second elastic material, is arranged so as to close the opening 12 of the substrate 1b. An annular magnet 25 similar to a magnet 23 attached to the connection rubber 22 is incorporated in the seal rubber 24 so that the magnet 23 and the magnet 25 face and attract each other when the seal rubber 24 is arranged to close the opening 12 of the substrate 1b. According to the attraction force of the magnet 23 and the magnet 25, the substrate lamination assembly 10 is fixed to the attachment block 21 and supported thereon. In this state, the connection rubber 22 contacts and seals the periphery of the opening 12 of the substrate 1a, and the seal rubber 24 contacts and seals the periphery of the opening of the substrate 12b. Thus, airtightness near the opening 12 is acquired by the connection rubber 22 and the seal rubber 24, which allows more efficient evacuation of gas inside the substrate lamination assembly 10.

It should be noted that the connection rubber 22 and the seal rubber 24 are not limited to rubber if an elastic material having a seal function is used. The connection rubber 22 and the seal rubber 24 may be replaced with seal material formed of flexible plastics. However, in a case where the seal material is of a thermosetting type, it is preferable to use a material having heat resistance such as silicon or fluorocarbon since the baking process is performed in the state shown in FIG. 3.

As mentioned above, if the substrate lamination assembly 10 shown in FIG. 2 is used, the connection for evacuation in the process can be achieved with a simple structure such that the opening 12 is aligned with a suction port of the suction pipe 20 of the vacuum suction apparatus and the substrate lamination assembly 10 is attached by the magnets, and the substrates 1a and 1b can be laminated with each other under uniform pressure by evacuation of gas in the cell space. Accordingly, the substrate lamination assembly having substrates laminated in a good condition and with uniform gap therebetween.

It should be noted that since the substrate lamination assembly 10 shown in FIG. 2 is provided with the seal material 11, which is not needed as a liquid crystal display panel, after the process of laminating the substrate with each other is ended, the area where the seal material 11 is applied is cut off along a single dashed chain line in FIG. 2 in the removing process.

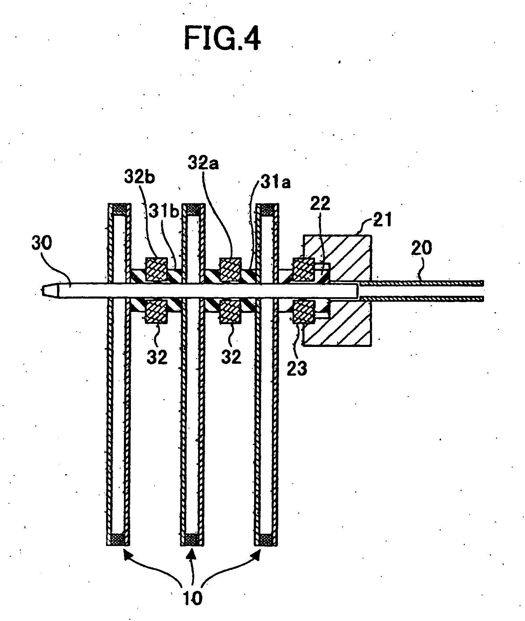

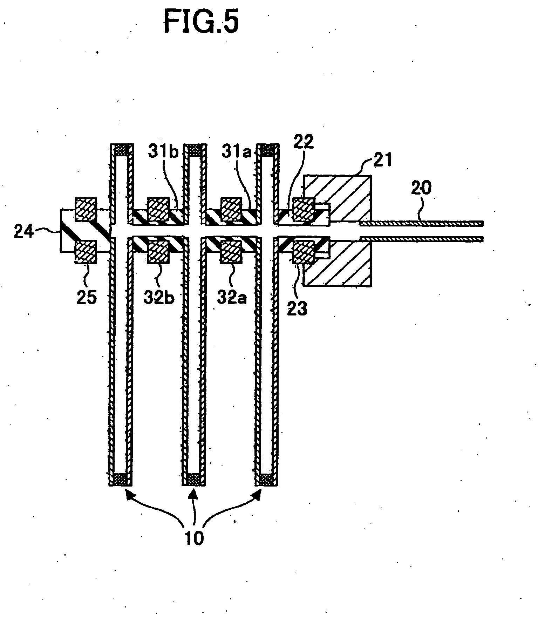

A description will now be given, with reference to FIG. 4 and FIG. 5, of a structure for attaching a plurality of the substrate lamination assemblies 10 shown in FIG. 2 to the same suction pipe 20. FIG. 4 is a cross-sectional view showing a state in a middle of a process to attach a plurality of the substrate lamination assemblies 10 to the same suction pipe 20. FIG. 5 is a cross-sectional view showing a state where a plurality of the substrate lamination assemblies 10 are attached to the same suction pipe 20.

In order to attach a plurality of the substrate lamination assemblies 10 to the same suction pipe 20, first, as shown in FIG. 4, the opening 12 of a first sheet of the substrate lamination assemblies 10 is fit on a positioning pin 30 in a state where the positioning pin 30 is inserted into the suction hole of the attachment block 21. Then, a relay rubber 31a, which has the same structure as the seal rubber 24 but has a through hole in response to the opening 12, is fit on the positioning pin 30. An annular magnet 32a is incorporated in the relay rubber 31a, which is a third elastic material so that the first sheet of the substrate lamination assemblies 10 is supported on the attachment block 21 by the magnet 32a incorporated in the relay rubber 31a and the magnet 23 of the connection rubber 21.

Then, the opening 12 of a second sheet of the substrate lamination assemblies 10 is fit to the positioning pin 30, and, subsequently, a relay rubber 31b is fit to the positioning pin 30. Thereby, the magnet 32a incorporated in the relay rubber 31a and a magnet 32b incorporated in the relay rubber 31b attract each other, and, thus, the second sheet of the substrate lamination assemblies 10 is supported on the attachment block 21 via the first sheet of the substrate lamination assemblies 10 (the relay rubber 31a - the connection rubber 23). In this manner, a desired number of the substrate lamination assemblies 10 are fit to the positioning pin 30, and, thereafter, the positioning pin 30 is removed. At this time, the substrate lamination assemblies 10 other than the last sheet of the substrate lamination assemblies 10 are supported by the magnets arranged between the substrate lamination assemblies 10. Here, the last sheet of the substrate lamination assemblies 10 means the substrate lamination assemblies 10 fit to the positioning pin 30 for the last time. Thus, only the last sheet of the substrate lamination assemblies 10 has to be supported.

Then, while supporting the last sheet of the substrate lamination assemblies 10, the seal rubber 24 is attached to the opening 12 of the last sheet of the substrate lamination assemblies 10 as shown in FIG. 5. Thereby, the last sheet of the substrate lamination assemblies 10 is also supported on the attachment block 21 by the attraction force of the magnets. As mentioned above, since all of the substrate lamination assemblies 10 are connected to the suction pipe 20 via the openings 12, a vacuum can be formed in the cell spaces of all of the substrate lamination assemblies 10 by evacuating gas from the suction pipe 20.

As mentioned above, by using the substrate lamination assembly 10 shown in FIG. 2, a plurality of the substrate lamination assemblies 10 can be easily connected to the vacuum suction apparatus. As a result, a manufacturing process time needed to process all of the plurality of the substrate lamination assemblies 10 can be reduced, which reduces a manufacturing cost per one liquid crystal panel.

After the process of evacuating gas is ended, the substrate lamination assemblies 10 can be removed easily by stopping the evacuation and merely removing the seal rubber 24 and the relay rubber 31 by hand.

Moreover, the portions of the substrate lamination assemblies 10 sandwiched by the connection rubber 21, the relay rubbers 31 and the seal rubber 24 are outside portions of the portions where the cell spaces are formed, and a force of the magnets to sandwich the substrate lamination assemblies 10 is not applied to the portion of the substrates where the cell spaces are formed, and, thus, a local force is not applied to the portion where the cell space is formed, which enables formation of the cell space having uniform gap.

Further, since the substrate laminating process is performed in a state where the opening is provided at one position of the substrate lamination assembly and the substrate lamination assembly is suspended due to a gravity by supporting the opening part, an external force other than an atmospheric pressure due to the evacuation is not applied to the substrate lamination assembly, which results in formation of the cell space having uniform gap.

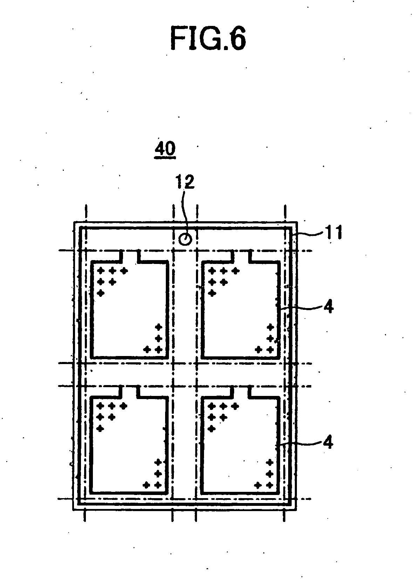

Here, a plurality of cell spaces can be formed in a single sheet of the substrate lamination assembly by applying the structure of the substrate lamination assembly 10 shown in FIG. 2. FIG. 6 is a plan view of a substrate lamination assembly 40 in which a plurality of cell spaces 10 are formed.

In the substrate lamination assembly 40 shown in FIG. 6, cell spaces corresponding to four sheets of liquid crystal panel are formed by the seal material 4, and the seal material 11 is provided so as to surround all of the four cell spaces. The opening 12 for evacuation may be provided at one position in the area surrounded by the seal material 11.

The substrate lamination assembly 40 is connectable to the vacuum suction apparatus according to a method shown in FIG. 3 through FIG. 5 similar to the substrate lamination assembly 10 shown in FIG. 2. The substrate lamination assembly 40 can be divided into each cell space forming an individual liquid crystal panel by cutting the substrate lamination assembly along a single-dashed chain line in FIG. 6 after the evacuation process. It should be noted that a number of cell spaces formed in the single sheet of the substrate lamination assembly is not limited to four, and an arbitrary number of cell spaces can be formed in consideration of a size of each cell space and a size of the substrate lamination assembly 40. Additionally, the arrangement of the cell spaces can be a linear arrangement or a matrix arrangement.

Thus, if a plurality of cell spaces are formed in a single sheet of the substrate lamination assembly, gas can be evacuated simultaneously from a plurality of cell spaces corresponding to a plurality of liquid crystal display panels by merely connecting the single sheet of the substrate lamination assembly to the vacuum suction apparatus. Accordingly, the curing process of the seal material forming a plurality of cell spaces can be performed at the same time, which results in a reduction in the manufacturing cost per one liquid crystal display panel. Additionally, by connecting a plurality of substrate lamination assemblies each of which having a plurality of cell spaces formed therein according to the method shown in FIG. 5, a more number of substrate lamination assemblies can be processed at the same time, which further reduces the manufacturing cost per one liquid crystal display panel.

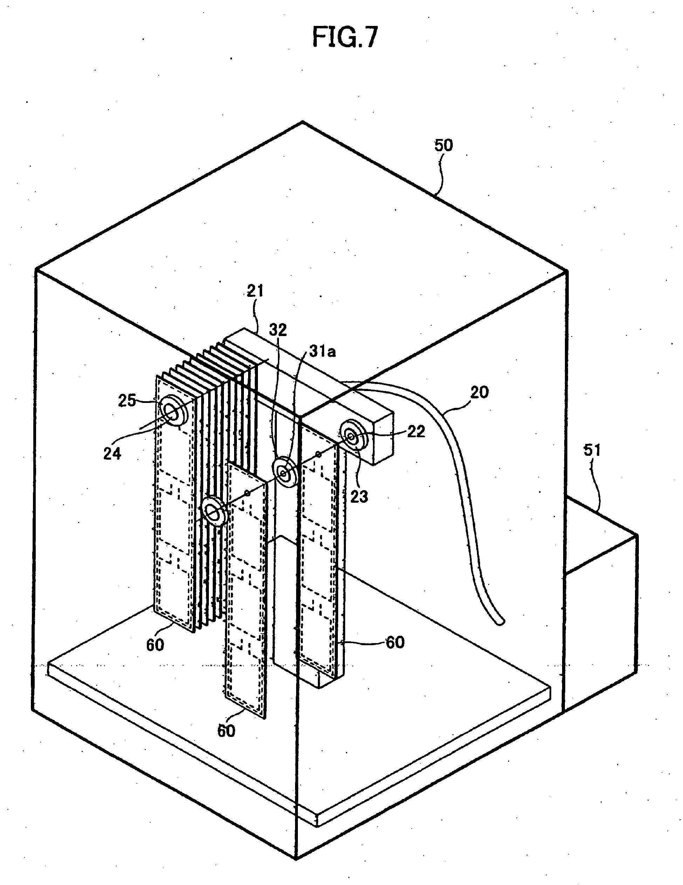

A description will now be given, with reference to FIG. 7, of a manufacturing apparatus that applies the process shown in FIG. 1-(h) to the substrate lamination assembly shown in FIG. 2 or FIG. 6. FIG. 7 is an illustration of a baking apparatus for laminating the substrates while evacuating gas therefrom. It should be noted that if there is no need to use a thermosetting adhesive, there is no need to perform baking when laminating the substrates.

The baking apparatus as a manufacturing apparatus of the liquid crystal display panel shown in FIG. 7 has an oven 50 and a vacuum suction apparatus 51. The oven 50 is an apparatus that can maintain a temperature inside at a high temperature (for example, a curing temperature of the seal material used for lamination of the substrates). The vacuum suction apparatus 51 is an apparatus that is constituted by a vacuum pump as a vacuum source, valves, etc., and can form a vacuum of about 80 Pa.

In the oven 50, a support mechanism is provided so as to support the substrate lamination assembly 60. The support mechanism includes the attachment block 21, the connection rubber 22, the relay rubbers 31a and 31b, the seal rubber 24, and the magnets 23, 32a, 32b and 25 attached to the rubbers shown in FIG. 3 through FIG. 5.

A plurality of the substrate lamination assemblies 60 can be accommodated in the oven 50 in a state where they are supported on the attachment block 21. Here, the substrate lamination assembly 60 has the same structure as the substrate lamination assembly 40 shown in FIG. 6 except for tree cell spaces being formed and arranged along a longitudinal direction. If, for example, plastic substrates are used as the substrates 1a and 1b, and if a width of the plastic substrates is large, it is possible that the plastic substrates warp greatly. Thus, if the cell spaces are arranged along a longitudinal direction by making the plastic substrates in an elongated shape, an amount of warp in a transverse direction can be reduced.

In the example shown in FIG. 7, the attachment block 21 is provided with two connection rubbers 22, and the substrate lamination assembly 60 can be attached at two positions. The suction pipe 20 extending from the attachment block 21 is connected to the vacuum suction apparatus 51 outside the oven 50. A plurality of the substrate lamination assemblies 60 can be attached to the attachment block 21 in a stacked state, the connection for evacuation can be performed simultaneously. Accordingly, the connection for evacuation can be carried out in a very short time, and the connection mechanism for evacuation does not occupy a large space in the oven 50. Thus, many substrate lamination assemblies 60 can be accommodated efficiently in the limited space in the oven 50.

A plurality of substrate lamination assemblies 60 in which the substrates are tentatively fixed to each other in the process shown in FIG. 1-(g) is attached to the attachment block 21 in the oven 50, and, thereafter, the vacuum suction apparatus 51 is operated so as to evacuate gas from the substrate lamination assemblies 60 and a temperature inside the oven 50 is raised to a curing temperature (for example, 180°C) of the seal material 4 and the temperature is maintained for a predetermined time (for example, 90 minutes). Thereby, the seal material 4 is completely cured, which results in completion of the liquid crystal display panel.

After the seal material 4 is completely cured, the substrate lamination assemblies 60 are taken cut of the oven 50, and each substrate lamination assembly 60 is cut and divided into individual cell spaces. Thereafter, a liquid crystal is injected into each cell space, and the liquid crystal display panels are completed.

As mentioned above, according to the baking apparatus shown in FIG. 7, a plurality of substrate lamination assemblies can be baked while evacuating gas therefrom simultaneously. Thus, a manufacturing process time when manufacturing many liquid crystal panels can be reduced, which reduces a manufacturing cost of the liquid crystal display devices.

## Claims

1. A manufacturing method of a panel that is formed by laminating a pair of substrates (1a,1b) with each other,
a seal forming step of providing a first seal material (4) on one of the substrates (1a) and providing a second seal material (11) to completely surround the first seal material (4) ;
a laminating step of laminating said pair of substrates with each other in a state where a cell space is formed between said substrates with said first and second seal materials (4,11) sandwiched between said substrates (1a,1b);
a depressurizing step of depressurizing an inner space of said second seal material (11) containing said cell space **characterised in that** said depressurising step is performed through an opening (12) provided in the substrates outside said first seal material (4) and inside said second seal material (11); and by
a removing step of removing a portion where said second seal material (11) is provided so that said cell space formed by said first seal material remains.

2. The manufacturing method as claimed in claim 1, wherein said seal forming step includes applying said first and second seal materials (4,11) by a dispenser.

3. The manufacturing method as claimed in claim 1, wherein said seal forming step includes providing said first seal material (4) so as to form an opening (4a) connected to said cell space formed by said first seal material (4).

4. The manufacturing method as claimed in claim 1, wherein an ultraviolet-light curable resin is used as said first and second seal materials (4,11), and said seal forming step includes irradiating an ultraviolet light onto said first and second seal materials so as to set said first and second seal materials in a half-cured state.

5. The manufacturing method as claimed in claim 4, wherein said laminating step includes irradiating an ultraviolet light onto said first and second seal materials (4,11) so as to cure said first and second seal materials and tentatively fix said substrates to each other.

6. The manufacturing method as claimed in claim 1, wherein said depressurizing step includes heating laminated said pair of substrates (1a, 1b) so as to cure said first and second seal materials.

7. The manufacturing method as claimed in claim 1, wherein said depressurizing step includes supporting said pair of substrates (1a,1b) by sandwiching a peripheral portion of an opening (12) provided in said pair of substrates by a pair of magnets (23,25) via elastic materials, and simultaneously connecting a suction pipe (20) for depressurization to said opening (12) via the elastic materials.

8. The manufacturing method as claimed in claim 7, wherein said depressurizing step is carried out in a state where a plurality of said pairs of substrates are accommodated in a heating oven (50).

9. The manufacturing method as claimed in claim 1, wherein said seal forming step includes providing said first seal material (4) so as to form a plurality of said cell spaces inside said second seal material (11).

10. The manufacturing method as claimed in claim 1, further comprising a partition-wall forming step of forming partition walls (3) in an area forming said cell space by said first seal material (4) said partition walls for dividing said cell space into small areas.

11. A manufacturing apparatus for manufacturing a panel that is formed by laminating a pair of substrates (1a,1b) with each other, said manufacturing apparatus Comprising:
a support mechanism that supports a substrate lamination assembly formed by laminating the pair of substrates and tentatively fixing to each other; and
a depressurizing mechanism that depressurizes a cell space formed in said substrate lamination assembly through an opening (12) formed in said pair of substrates of said substrate lamination assembly,
wherein said support mechanism simultaneously performs the support of said substrate lamination assembly and the connection for depressurization of a space between said substrates by sandwiching a peripheral portion of said opening of said pair of substrates by a pair of elastic materials.

12. The manufacturing apparatus as claimed in claim 11, wherein said support mechanism includes said pair of elastic materials (22,24) and a magnet (23,25) attached to each of said elastic materials, and said substrate lamination assembly is supported by being sandwiched by said elastic materials by an attraction force between the magnets.

13. The manufacturing apparatus as claimed in claim 12, wherein said pair of elastic materials include a first elastic material (21) having a through hole and a second elastic material (24) having no through hole, and wherein the connection for depressurization is performed by positioning and fixing said substrate lamination assembly to said support mechanism so that the through hole of the first elastic material aligns with said opening of said substrate lamination assembly, and sealing the opening on a side opposite to a side facing said first elastic material by said second seal material.

14. The manufacturing apparatus as claimed in claim 13, wherein said support mechanism further includes a third elastic material (31a,31b) having a through hole and a magnet (32a,32b) attached to the third elastic material, and said support mechanism supports a plurality of said substrate lamination assemblies (10) via said first and second elastic materials and said third elastic materials in a state where said plurality of substrate lamination assemblies can be depressurized.

15. The manufacturing apparatus as claimed in claim 11, further comprising a heating oven (50) that accommodates said support mechanism.

16. The manufacturing apparatus as claimed in claim 15 further comprising a suction apparatus (51) located outside said heating oven so as to depressurize said substrate lamination assembly accommodated in said heating oven by using the suction apparatus as a suction source.

## Patentansprüche

1. Ein Herstellungsverfahren eines Panels, welcher durch Laminieren eines Paars von Substraten (1a, 1b) miteinander geformt wird, umfassend
einen Dichtungsformungsschritt zum Bereitstellen eines ersten Dichtungsmaterials (4) auf einem der Substrate (1a) und Bereitstellen eines zweiten Dichtungsmaterials (11), um das erste Dichtungsmaterial (4) vollständig zu umgeben;
einen Laminierschritt zum Laminieren des Paars von Substraten miteinander in einem Zustand, in dem ein Zellenraum zwischen den Substraten mit dem ersten und dem zweiten Dichtungsmaterial (4, 11) geformt ist, welche zwischen den Substraten (1a, 1b) eingelegt sind;
einen Druckherabsetzungsschritt zum Herabsetzen eines Drucks in einem Innenraum des zweiten Dichtungsmaterials (11), welches den Zellenraum enthält,
**dadurch gekennzeichnet, dass** der Druckherabsetzungsschritt durch eine Öffnung (12) durchgeführt wird, welche in den Substraten vorgesehen ist, außerhalb des ersten Dichtungsmaterials (4), und innerhalb des zweiten Dichtungsmaterials (11); und **gekennzeichnet durch**
einen Entfernungsschritt zum Entfernen eines Abschnitts, in dem das zweite Dichtungsmaterial (11) vorgesehen ist, so dass der Zellenraum verbleibt, welcher **durch** das erste Dichtungsmaterial geformt wird.

2. Ein Herstellungsverfahren nach Anspruch 1, worin der Dichtungsformungsschritt ein Aufbringen des ersten und des zweiten Dichtungsmaterials (4, 11) durch einen Dispenser umfasst.

3. Das Herstellungsverfahren nach Anspruch 1, worin der Dichtungsformungsschritt ein Bereitstellen des ersten Dichtungsmaterials (4) umfasst, um eine Öffnung (4a) zu formen, welche mit dem Zellenraum verbunden ist, der durch das erste Dichtungsmaterial (4) geformt wird.

4. Das Herstellungsverfahren nach Anspruch 1, worin ein bei ultraviolettem Licht aushärtendes Harz als das erste und das zweite Dichtungsmaterial (4, 11) verwendet wird und der Dichtungsformungsschritt ein Ausstrahlen eines ultravioletten Lichts auf das erste und das zweite Dichtungsmaterial umfasst, um das erste und das zweite Dichtungsmaterial in einen halb ausgehärteten Zustand zu versetzen.

5. Das Herstellungsverfahren nach Anspruch 4, worin der Laminierschritt ein Ausstrahlen eines ultravioletten Lichts auf das erste und das zweite Dichtungsmaterial (4, 11) umfasst, um das erste und das zweite Dichtungsmaterial auszuhärten und die Substrate provisorisch aneinander zu fixieren.

6. Das Herstellungsverfahren nach Anspruch 1, worin der Druckherabsetzungsschritt ein Erhitzen des laminierten Paars von Substraten (1a, 1b) umfasst, um das erste und das zweite Dichtungsmaterial auszuhärten.

7. Das Herstellungsverfahren nach Anspruch 1, worin der Druckherabsetzungsschritt ein Stützen des Paars von Substraten (1a, 1b) umfasst, indem ein Umfangsabschnitt einer Öffnung (12), welche in dem Paar von Substraten vorgesehen ist, zwischen ein Paar von Magneten (23, 25) eingelegt wird über elastische Materialien, und ein gleichzeitiges Verbinden einer Saugleitung (20) für eine Druckherabsetzung mit der Öffnung (12) über die elastischen Materialien.

8. Das Herstellungsverfahren nach Anspruch 7, worin der Druckherabsetzungsschritt in einem Zustand durchgeführt wird, in dem eine Mehrzahl der Paare von Substraten in einem Heizofen (50) untergebracht ist.

9. Das Herstellungsverfahren nach Anspruch 1, worin der Dichtungsformungsschritt ein Bereitstellen des ersten Dichtungsmaterials (4) umfasst, um eine Mehrzahl der Zellenräume innerhalb des zweiten Dichtungsmaterials (11) zu formen.

10. Das Herstellungsverfahren nach Anspruch 1, des Weiteren umfassend einen Trennwandformungsschritt zum Formen von Trennwänden (3) in einem Bereich, welcher den Zellenraum durch das erste Dichtungsmaterial (4) bildet, wobei die Trennwände zum Aufteilen des Zellenraums in kleine Bereiche sind.

11. Ein Herstellungsgerät zum Herstellen eines Panels, welcher durch Laminieren eines Paars von Substraten (1a, 1b) miteinander geformt wird, wobei das Herstellungsgerät umfasst:
einen Stützmechanismus, welcher eine Substratlaminatanordnung stützt, welche durch Laminieren des Paars von Substraten und provisorisches Fixieren aneinander geformt wird; und
einen Druckherabsetzungsmechanismus, welcher einen Druck in einem Zellenraum, der in der Substratlaminatanordnung geformt ist, durch eine Öffnung (12) herabsetzt, welche in dem Paar von Substraten der Substratlaminatanordnung geformt ist,
worin der Stützmechanismus gleichzeitig das Stützen der Substratlaminatanordnung und das Verbinden zur Druckherabsetzung in einem Raum zwischen den Substraten durchführt, indem ein Umfangsabschnitt der Öffnung des Paars von Substraten zwischen ein Paar elastischer Materialien eingelegt wird.

12. Das Herstellungsgerät nach Anspruch 11, worin der Stützmechanismus das Paar elastischer Materialien (22, 24) und einen Magnet (23, 25) umfasst, welcher an jedem der elastischen Materialien befestigt ist, und die Substratlaminatanordnung, indem sie zwischen die elastischen Materialien eingelegt ist, durch eine Anziehungskraft zwischen den Magneten gestützt wird.

13. Das Herstellungsgerät nach Anspruch 12, worin das Paar elastischer Materialen ein erstes elastisches Material (21), welches ein Durchgangsloch besitzt, und ein zweites elastisches Material (24) umfasst, welches kein Durchgangsloch besitzt, und worin das Verbinden für eine Druckherabsetzung durchgeführt wird, indem die Substratlaminatanordnung an dem Stützmechanismus positioniert und fixiert wird, so dass das Durchgangsloch des ersten elastischen Materials mit der Öffnung der Substratlaminatanordnung ausgerichtet ist, und indem die Öffnung auf einer Seite gegenüber einer Seite, die dem ersten elastischen Material gegenüberliegt, durch das zweite Dichtungsmaterial abgedichtet wird.

14. Das Herstellungsgerät nach Anspruch 13, worin der Stützmechanismus des Weiteren ein drittes elastisches Material (31a, 31b), welches ein Durchgangsloch besitzt, und einen Magnet (32a, 32b) umfasst, der an dem dritten elastischen Material befestigt ist, und der Stützmechanismus eine Mehrzahl der Substratlaminatanordnungen (10) sützt, über das erste und das zweite elastische Material und die dritten elastischen Materialien, in einem Zustand, in dem ein Druck in der Mehrzahl von Substratlaminatanordnungen herabgesetzt werden kann.

15. Das Herstellungsgerät nach Anspruch 11, des Weiteren umfassend einen Heizofen (50), welcher den Stützmechanismus unterbringt.

16. Das Herstellungsgerät nach Anspruch 15, des Weiteren umfassend ein Sauggerät (51), welches außerhalb des Heizofens angeordnet ist, um einen Druck in der Substratlaminatanordnung herabzusetzen, die in dem Heizofen untergebracht ist, indem das Sauggerät als eine Saugquelle verwendet wird.

## Revendications

1. Procédé de fabrication d'un panneau qui est formé en stratifiant une paire de substrats (1a, 1b) ensemble, comprenant :
une étape de formation de joint d'étanchéité consistant à placer un premier matériau d'étanchéité (4) sur les substrats (1a) et à fournir un second matériau d'étanchéité (11) pour entourer complètement le premier matériau d'étanchéité (4) ;
une étape de stratification consistant à stratifier ladite paire de substrats ensemble dans un état où un espace formant compartiment est formé entre lesdits substrats avec lesdites premier et second matériaux d'étanchéité (4, 11) pris en sandwich entre lesdits substrats (1a, 1b);
une étape de dépressurisation consistant à dépressuriser un espace intérieur dudit second matériau d'étanchéité (11) contenant ledit espace formant compartiment **caractérisée en ce que** ladite étape dépressurisation est réalisée par un ouverture (12) pratiquée dans les substrats à l'extérieur dudit premier matériau d'étanchéité (4) et à l'intérieur dudit second matériau d'étanchéité (11) ; et
une étape d'enlèvement consistant à enlever une partie où ledit second matériau d'étanchéité (11) est fourni de telle manière que ledit espace formant compartiment formé par ledit premier matériau d'étanchéité demeure.

2. Procédé de fabrication selon la revendication 1, dans lequel ladite étape de formation inclut d'appliquer lesdits premier et second matériaux d'étanchéité (4, 11) par un distributeur.

3. Procédé de fabrication selon la revendication 1, dans lequel ladite étape de formation de joint d'étanchéité inclut de placer ledit premier matériau d'étanchéité (4) de façon à former une ouverture (4a) reliée au dit espace formant compartiment formé par ledit premier matériau d'étanchéité (4).

4. Procédé de fabrication selon la revendication 1, dans lequel une résine durcissant aux ultraviolets est utilisée comme lesdits premier et second matériaux d'étanchéité (4, 11), et ladite étape de formation de joint d'étanchéité inclut d'irradier une lumière ultraviolette sur lesdits premier et second matériaux d'étanchéité de façon à placer lesdits premier et second matériaux d'étanchéité dans un état semi-durci.

5. Procédé de fabrication selon la revendication 4, dans lequel ladite étape de stratification inclut d'irradier une lumière ultraviolette sur lesdits premier et second matériaux d'étanchéité (4, 11) de façon à durcir lesdits premier et second matériaux d'étanchéité et fixer provisoirement lesdits substrats ensemble.

6. Procédé de fabrication selon la revendication 1, dans lequel ladite étape de dépressurisation inclut de chauffer ladite paire de substrats (1a, 1b) stratifiés de façon à durcir lesdits premier et second matériaux d'étanchéité.

7. Procédé de fabrication selon la revendication 1, dans lequel ladite étape de dépressurisation inclut de supporter ladite paire de substrats (1a, 1b) en prenant en sandwich une partie périphérique d'une ouverture (12) pratiquée dans ladite paire de substrats par une paire d'aimants (23, 25) via des matériaux élastiques, et de connecter simultanément un tuyau d'aspiration (20) pour la dépressurisation à ladite ouverture (12) via les matériaux élastiques.

8. Procédé de fabrication selon la revendication 7, dans lequel ladite étape de dépressurisation est réalisée dans un état où une pluralité desdites paires de substrats sont placées dans un four de chauffage (50).

9. Procédé de fabrication selon la revendication 1, dans lequel ladite étape de formation de joint d'étanchéité inclut de placer ledit premier matériau d'étanchéité (4) de façon à former une pluralité desdits espaces formant compartiment à l'intérieur dudit second matériau d'étanchéité (11).

10. Procédé de fabrication selon la revendication 1, comprenant en outre une étape de formation de paroi de séparation consistant à former des parois de séparation (3) dans une zone formant ledit espace formant compartiment avec ledit premier matériau d'étanchéité (4) lesdites parois de séparation étant destinées à diviser ledit espace formant compartiment en de petites zones.

11. Dispositif de fabrication pour fabriquer un panneau qui est formé en stratifiant une paire de substrats (1a, 1b) ensemble, ledit dispositif de fabrication comprenant :
un mécanisme de support qui supporte un ensemble de stratification de substrats formé en stratifiant la paire de substrats et en les fixant provisoirement ensemble ; et
un mécanisme de dépressurisation qui dépressurise un espace formant compartiment formé dans ledit ensemble de stratification de substrats par une ouverture (12) formée dans ladite paire de substrats dudit ensemble de stratification de substrats,
dans lequel ledit mécanisme de support réalise le support dudit ensemble de stratification de substrats et la connexion pour dépressurisation d'un espace entre lesdits substrats en prenant en sandwich une partie périphérique de ladite ouverture de ladite paire de substrats par une paire de matériaux élastiques.

12. Dispositif de fabrication selon la revendication 11, dans lequel ledit mécanisme de support inclut ladite paire de matériaux élastiques (22, 24) et un aimant (23, 25) fixé sur chacun desdits matériaux élastiques, et ledit ensemble de stratification de substrats est supporté en étant pris en sandwich par lesdits matériaux élastiques par une force d'attraction entre les aimants.

13. Dispositif de fabrication selon la revendication 12, dans lequel ladite paire de matériaux élastiques inclut un premier matériau élastique (21) ayant un trou de passage et un second matériau élastique (24) n'ayant pas de trou de passage, et dans lequel la connexion pour dépressurisation est réalisée en positionnant et fixant ledit ensemble de stratification de substrats sur ledit mécanisme de support de telle manière que ledit trou de passage du premier matériau élastique s'aligne avec ladite ouverture dudit ensemble de stratification de substrats, et en fermant étanchement l'ouverture sur un côté opposé à un côté dirigé vers ledit premier matériau élastique par ledit second matériau d'étanchéité.

14. Dispositif de fabrication selon la revendication 13, dans lequel ledit mécanisme de support comprend en outre un troisième matériau élastique (31a, 31b) ayant un trou de passage et un aimant (32a, 32b) fixé sur le troisième matériau élastique, et ledit mécanisme de support supporte une pluralité desdits ensembles de stratification de substrats (10) via lesdits premier et second matériaux élastiques et lesdits troisièmes matériaux élastiques dans un état où ladite pluralité d'ensembles de stratification de substrats peuvent être dépressurisés.

15. Dispositif de fabrication selon la revendication 11, comprenant en outre un four de chauffage (50) dans lequel est placé ledit mécanisme de support.

16. Dispositif de fabrication selon la revendication 15, comprenant en outre un dispositif d'aspiration (51) situé à l'extérieur dudit four de chauffage de façon à dépressuriser ledit ensemble de stratification de substrats placé dans ledit four de chauffage en utilisant le dispositif d'aspiration comme source d'aspiration.
